(19) Europäisches Patentamt

European Patent Office

Office européen des brevets

(11) **EP 0 918 961 B1**

(12) **EUROPÄISCHE PATENTSCHRIFT**

(45) Veröffentlichungstag und Bekanntmachung des Hinweises auf die Patenterteilung:
**24.05.2000   Patentblatt 2000/21**

(51) Int Cl.⁷: **F16H 49/00**, F16H 1/32

(21) Anmeldenummer: 97938786.7

(86) Internationale Anmeldenummer:
**PCT/DE97/01794**

(22) Anmeldetag: **14.08.1997**

(87) Internationale Veröffentlichungsnummer:
**WO 98/08008 (26.02.1998 Gazette 1998/08)**

(54) **UNTERSETZUNGSGETRIEBE**

STEP-DOWN GEAR UNIT

DEMULTIPLICATEUR

(84) Benannte Vertragsstaaten:
**AT BE CH DK ES FI FR GB GR IE IT LI LU MC NL PT SE**

(30) Priorität: **24.08.1996  DE 29614738 U**

(43) Veröffentlichungstag der Anmeldung:
**02.06.1999   Patentblatt 1999/22**

(73) Patentinhaber: **IMS MORAT SÖHNE GmbH D-78166 Donaueschingen (DE)**

(72) Erfinder:
• **HIRN, Helmut D-72147 Nehren (DE)**

• **LAUDENBACH, Franz D-78559 Gosheim (DE)**

(74) Vertreter: **Patentanwälte Westphal, Mussgnug & Partner Waldstrasse 33 78048 Villingen-Schwenningen (DE)**

(56) Entgegenhaltungen:
**EP-A- 0 206 754          EP-A- 0 309 197 EP-A- 0 514 829**

• **MUSSER C W: "THE HARMONIC DRIVE" MACHINE DESIGN, 14.April 1960, Seiten 160-173, XP002031070**

**Beschreibung**

Die Erfindung betrifft ein Untersetzungsgetriebe gemäß den Merkmalen des Oberbegriffs des Anspruchs 1.

Getriebe der gattungsgemäßen Art sind in der Fachwelt unter dem Begriff "Harmonic-Drive-System" bekannt (Dubbel, Taschenbuch für Maschinenbau, 15. Auflage, S. 1069; Firmenschrift der Firma Harmonic Drive System GmbH, 63225 Langen/Hessen).

Diese Getriebe bestehen im wesentlichen aus drei Grundelementen, nämlich:

a) aus dem sog. Wave Generator als eigentliches Antriebselement. Dieses besteht aus einem elliptischen Kernteil, auf den ein Kugellager aufgezogen ist und das auch mit der Antriebswelle versehen ist;

b) aus der sog. Flexspline; dabei handelt es sich um ein in ihrer Grundform zylindrische, jedoch radial flexible Stahlbuchse (Abrollbuchse) mit einer Außenverzahnung, in welcher der elliptische Kernteil drehbar angeordnet ist und schließlich

c) aus dem sog. Circular Spline. Bei diesem Teil handelt es sich um einen innenverzahnten feststehenden Stützring, dessen Zähne ständig in Eingriff stehen mit der elliptisch verformbaren Flexspline, d.h. mit dieser verformbaren Stahlbuchse. Dabei hat der innenverzahnte Stützring eine größere Zähnezahl als die flexible Stahlbuchse, die ständig mit zwei sich diametral gegenüberliegenden Umfangsabschnitten mit der Innenverzahnung des feststehenden Stützringes in Eingriff steht. Durch die Drehung des elliptischen Kernteils in der flexiblen Stahlbuchse werden bei jeder Umdrehung alle Zähne der Stahlbuchse nacheinander mit den Zähnen der Innenverzahnung des feststehenden Stützringes in Eingriff gebracht, wodurch eine Verdrehung der Stahlbuchse um die Differenz der Zähnezahlen entsteht.

Es können mit diesen Getrieben bei sehr kompakter Bauweise hohe Übersetzungen ins Langsame bzw. Untersetzungen erzielt werden. Die An- und Abtriebsdrehrichtungen sind jedoch gegensinnig. Die Formel für die Berechnung der jeweiligen Übersetzungsverhältnisse lautet:

$$i = \frac{Z_2}{Z_1 - Z_2}$$

wobei $Z_1$ die Zähnezahl der flexiblen Stahlbuchse und $Z_2$ die Zähnezahl des feststehenden innenverzahnten Stützringes ist. Nach Angaben des Herstellers solcher Harmonic Drive Getriebe sind Übersetzungsverhältnisse von 1:72 bis 1:320 möglich.

Eingesetzt werden solche Getriebe vornehmlich in Sondermaschinen und Industrierobotern.

Bei einer bekannten Ausführungsform eines solchen Harmonic Drive-Getriebes (EP 0 514 829 A2) ist die radial flexible Stahlbüchse topfförmig ausgebildet und in einem axialen Abstand von ihrer Außenverzahnung mit einer stabilen Stirnwand versehen. Die dünne, in ihrer Grundform zylindrische Wandung der Stahlbuchse ist elastisch verformbar, so daß sie sich einerseits der zylindrischen Form der Stirnwand und andererseits flexibel der umlaufenden elliptischen Umfangsform des Getriebekerns, d.h. des sog. Wave Generators, anpassen kann.

Bei anderen Ausführungsformen solcher Getriebe ist als Übertragungselement zwischen der flexiblen Stahlbuchse, d.h. der Flexspline, und einer Arbeitswelle (DE 39 06 053 C2 und EP 0 309 197 B2) jeweils ein zweiter Zahnring mit einer Innenverzahnung vorgesehen, der koaxial zum ersten, feststehenden, innenverzahnten Stützring angeordnet ist, der auch zumindest annähernd den gleichen Innendurchmesser hat wie der feststehende Stützring, der aber eine vom feststehenden Stützring abweichende Zähnezahl aufweist. Die Zähne der flexiblen Stahlbuchse stehen dabei zugleich mit dem feststehenden Stützring und mit dem drehbaren Zahnring in Eingriff und zwar so, daß die Drehung der flexiblen Stahlbuchse unmittelbar auf den drehbaren Zahnring übertragen wird und zwar im Verhältnis 1:1, da der drehbare Zahnring die gleiche Zähnezahl aufweist wie die flexible Stahlbuchse, die sich ja während der Drehung des elliptischen Antriebskerns im Zahnkranz des feststehenden Stützrings abrollt.

Nachfolgend ist die Stahlbuchse als Abrollbuchse bezeichnet. Grundsätzlich basiert die Funktionsweise des gattungsgemäßen Untersetzungsgetriebes darauf, daß sich unterschiedlich lange Umfangsflächen schlupffrei aufeinander abrollen, wodurch sich die kürzere Umfangsfläche beim Abrollen um die Längendifferenz dreht.

Da diese bekannten Getriebe in allen Einzelteilen aus Stahl oder ähnlichem Material bestehen und in aller Regel mit radial elastischen, d.h. verformbaren Kugellagern ausgerüstet sind, welche zwischen der Mantelfläche des elliptischen Antriebskerns und der flexiblen Abrollbuchse angeordnet sind, erfordern diese Getriebe sehr hohe Herstellungskosten, zumal ja auch eine hohe Fertigungspräzision Voraussetzung für ein einwandfreies Funktionieren ist.

Der Erfindung liegt die Aufgabe zugrunde, ein Untersetzungsgetriebe der eingangs genannten Art so zu gestalten, daß seine einzelnen Bestandteile einfacher und kostengünstiger, vor allem aber in kleinen Dimensionen herstellbar und leicht, insbesondere automatisch montierbar sind, daß bei sehr geringen Reibungsverlusten ein hoher Wirkungsgrad, ein spielfreier Eingriff und höhere Untersetzungen bzw. Übersetzungen ins Langsame erreichbar sind.

Gelöst wird diese Aufgabe durch ein Untersetzungsgetriebe gemäß den Merkmalen des Anspruchs 1.

Weiterbildungen sind Gegenstand der Unteransprüche.

Gegenüber den bekannten Getrieben der gattungsgemäßen Art wird durch die erfindungsgemäße Ausgestaltung nicht nur eine erheblich kostengünstigere Herstellungsmöglichkeit geschaffen, sondern es werden auch erheblich größere Variationsmöglichkeiten in der Ausführungsform geschaffen und insbesondere eine sehr kleine und kompakte Bauweise ermöglicht. Auch die Präzision der Drehbewegungsübertragung kann mit wesentlich einfacheren Mitteln erzielt werden. Es wird nämlich bei der erfindungsgemäßen Ausgestaltung des Getriebes in keinem Fall ein Rollen- oder Kugellager zwischen der Abrollbuchse und dem Antriebskern bzw. der diesen umschließenden Lagernabe benötigt.

Ein weiterer wichtiger Vorteil besteht darin, daß das Getriebe selbsthemmend ist, was bedeutet, daß kein auch noch so großes auf die Abrollbuchse ausgeübtes Drehmoment in der Lage ist, die Antriebswelle vor- oder rückwärts zu drehen. Gleichzeitig bedeutet das auch, daß die durch die Abrollbuchse in getrieblicher Verbindung stehende Arbeitswelle bei stillstehendem Getriebe bzw. stillstehendem Antrieb jeweils eine exakt definierte Winkellage einnimmt, die nur durch den Antrieb, d.h. durch eine entsprechende Verdrehung des Antriebskerns in der einen oder anderen Richtung verändert werden kann.

Bei den bekannten Getrieben der gattungsgemäßen Art ist eine Selbsthemmung nicht gegeben.

Zweckmäßigerweise besteht der Antriebskern, durch den die Übertragungselemente radial auslenkbar sind, aus einem einzigen Teil. Es liegt jedoch auch im Rahmen der Erfindung, den Antriebskern durch mehrere Teile zu bilden. Wesentlich hierbei ist, daß der mehrteilige Antriebskern ebenfalls ein oder mehrere Umfangsabschnitte der Außenmantelfläche der flexiblen Abrollbuchse in fortlaufendem Wechsel mit der Stützfläche des Stützringes in Eingriff bringt.

Um die Reibung zwischen den Übertragungselementen und dem Antriebskern zu verringern ist die Ausgestaltung nach Anspruch 6 von Vorteil.

Durch die Ausgestaltung nach Anspruch 7 erreicht man sehr gute bzw. optimale Kraft- und Drehmomentsverhältnisse und die Möglichkeit, sehr hohe Übersetzungs- bzw. Untersetzungsverhältnisse zu realisieren.

Mit der Ausgestaltung nach Anspruch 8 wird nicht nur eine sehr hohe Funktionssicherheit, sondern auch eine sehr verschleißarme und vor allem präzise Funktionsweise gewährleistet.

Eine besonders kostengünstige Ausführungsform ist Gegenstand des Anspruches 9, wobei mit der Ausgestaltung nach Anspruch 10 und/oder 11 geringe Reibungsverluste und damit ein hoher Wirkungsgrad sichergestellt werden können.

Während die Ausgestaltungen nach den Ansprüchen 12, 13 und 14 an sich schon bei den bekannten Getrieben der gattungsgemäßen Art prinzipiell realisiert sind, können sie auch bei der erfindungsgemäßen Ausführungsform vorteilhaft eingesetzt werden.

Die Ausgestaltung nach Anspruch 15 stellt eine Möglichkeit dar, innerhalb gewisser Grenzbereiche jede beliebige Übersetzung zu wählen, da die Zahnteilung bei einem reibschlüssigen Eingriff den Wert Null hat und das erzielte Übersetzungs- oder Untersetzungsverhältnis lediglich von den Längendifferenzen der Umfangslängen der aufeinander abrollenden Reibflächen bestimmt wird.

Es können somit auch Untersetzungsverhältnisse gewählt werden, deren Nenner keine ganze Zahl ist, sondern auch einen Dezimalbruch enthalten kann.

Statt eines rein reibschlüssigen Eingriffes besteht natürlich auch die Möglichkeit, sehr kleine bzw. feine Zahnteilungen vorzusehen, wobei es für manche Anwendungsfälle, bei denen es auf eine präzise winkelgetreue Antriebsübertragung nicht ankommt, unregelmäßige Verzahnungen beispielsweise in Form von Riefelungen, Rändelungen u. dgl. vorgesehen werden.

Eine vorteilhafte Ausgestaltung dazu ist Gegenstand des Anspruches 16 in sofern, als durch sie sichergestellt ist, daß die Drehbewegung der Abrollbuchse getrieblich verlustfrei und winkelgetreu übertragen werden kann.

Eine sehr vorteilhafte Ausgestaltung der Erfindung ist Gegenstand des Anspruches 17. Durch sie wird nämlich erreicht, daß auch die Verbindung zwischen der Abrollbuchse und der Arbeitswelle auf sehr kostengünstige und funktionell direkte Weise hergestellt werden kann.

Eine Variante dazu ist Gegenstand des Anspruches 18. Durch diese Ausgestaltung ist die Möglichkeit gegeben, durch weitere Getriebeglieder zusätzliche Untersetzungsverhältnisse einzubringen.

Während die Ausgestaltung nach Anspruch 19 prinzipiell bei den vorbekannten Getrieben der gattungsgemäßen Art bekannt ist, sieht die Ausgestaltung nach Anspruch 16 eine weitere Variante vor, die zusätzliche Möglichkeiten der Anwendung weiterer Übersetzungsverhältnisse erschließt.

Für leistungsmäßig anspruchsvollere Ausführungsformen des erfindungsgemäßen Untersetzungsgetriebes ist die Ausgestaltung nach Anspruch 21 von Vorteil, weil die als Stößel ausgebildeten Übertragungselemente aus einem anderen höher belastbaren Material hergestellt sein können, als die Speichen eines vollständigen Kunststoffteiles. Es können somit auch höhere Radialkräfte vom Antriebskern auf die Abrollbuchse übertragen werden, was insbesondere bei sehr feinen Verzahnungen bzw. unregelmäßigen Verzahnungen oder bei reibschlüssiger Kraftübertragung von Vorteil und großer funktioneller Bedeutung ist.

Als sehr zweckmäßig hat sich dabei die Ausgestaltung nach den Ansprüchen 22 bzw. 23 erwiesen.

Die Ansprüche 24 und 25 betreffen zwei vorteilhafte Ausgestaltungsmöglichkeiten bezüglich der Gestaltung und Anordnung des Führungskäfigs für die als Stößel ausgebildeten Übertragungselemente.

Mit den Ausgestaltungen der Ansprüche 26 und 27 wird eine einfach zu realisierende Möglichkeit geschaffen, Fertigungstoleranzen zur Erzielung eines absolut spielfreien Zahneingriffs zwischen der Abrollbuchse und dem Stützring zu kompensieren.

Statt eines ellipsenförmigen Antriebskerns, der zwei sich diametral gegenüberliegende Exzenternocken oder Höcker aufweist, kann es für bestimmte Anwendungsfälle, insbesondere bei solchen, die an der Arbeitswelle hohe Drehmomente verlangen, zweckmäßig und vorteilhaft sein, die Ausgestaltung nach Anspruch 28 vorzusehen, bei deren Anwendung jeweils drei Umfangsabschnitte der Abrollbuchse gleichzeitig in kraft- oder formschlüssigen Eingriff mit der Innenfläche bzw. Verzahnung des Stützringes stehen.

Die Ausgestaltung nach Anspruch 29 dient der zweckmäßigen und schützenden Verkapselung der möglicherweise hoch präzisen Getriebeteile.

Die Erfindung wird nachstehend anhand der Zeichnung näher erläutert. Es zeigt:

Fig. 1 in einer Stirnansicht gemäß der Schnittlinie I-I aus Fig. 2 ein Untersetzungsgetriebe;

Fig. 2 einen Schnitt II-II aus Fig. 1;

Fig. 3 in der gleichen Stirnansicht wie Fig. 1, den aus der Abrollbuchse, den Speichen und der Lagernabe bestehenden Kunststoffkörper;

Fig. 4 eine Seitenansicht des Untersetzungsgetriebes in natürlicher Größe;

Fig. 5 in einer Schnittansicht V-V aus Fig. 6 ein Untersetzungsgetriebe, das mit einer anderen Abtriebseinrichtung versehen ist;

Fig. 6 einen Schnitt VI-VI aus Fig. 5;

Fig. 6a in hälftiger Schnittdarstellung eine Variante zur Ausführungsform der Fig. 6, bei welcher der Stützring mit einer radial elastischen Innenverzahnung versehen ist;

Fig. 7 einen Abtriebszahnring in Schnittdarstellung;

Fig. 8 eine Ansicht VIII aus Fig. 7;

Fig. 9 in Schnittdarstellung eine andere Ausführungsform des Untersetzungsgetriebes, bei welcher der Abtriebszahnring über weitere Getriebeglieder mit einer Arbeitswelle in getrieblicher Verbindung steht;

Fig. 10 eine unvollständige Stirnansicht nach der Schnittlinie X-X aus Fig. 11 einer Ausführungsform, bei der die Innenfläche des Stützrings und die Umfangsfläche der Abrollbuchse jeweils mit Reibbelägen versehen sind und bei welcher die Lagernabe der Abrollbuchse wie beim Ausführungsbeispiel der Fig. 1 bis 4 über ein elastisches Verbindungsglied mit einer Arbeitswelle gekoppelt ist;

Fig. 11 ein Schnitt XI-XI aus Fig. 10;

Fig. 12 in der gleichen Ansicht wie Fig. 10 ein Ausführungsbeispiel, bei welchem die reibschlüssig mit dem Stützring in Eingriff stehende Abrollbuchse über eine Verzahnung mit einem Abtriebszahnrad in Eingriff steht;

Fig. 13 einen Schnitt XIII-XIII aus Fig. 12;

Fig. 14 die Stirnansicht einer radiale Speichen und eine Lagernabe aufweisenden Abrollbuchse, deren Speichen mit Metalleinlagen versehen sind;

Fig. 15 einen Teilschnitt XV-XV aus Fig. 14;

Fig. 16 einen Schnitt XVI-XVI aus Fig. 15;

Fig. 17 einen Schnitt XVII-XVII aus Fig. 15;

Fig. 18 die Stirnansicht einer anderen Ausführungsform der einstückig mit Speichen und einer Lagernabe versehenen Abrollbuchse;

Fig. 19 einen Teilschnitt XIX-XIX aus Fig. 18;

Fig. 20 eine außenverzahnte Abrollbuchse ohne Speichen, Stößel und Lagerbuchse in Stirnansicht;

Fig. 21 die Abrollbuchse der Fig. 14 mit einem eingelegten Metallring;

Fig. 22 die offene Stirnansicht einer Ausführungsform des Untersetzungsgetriebes, bei dem die Übertragungsglieder zwischen dem Antriebskern und der Abrollbuchse aus Stößeln bestehen;

Fig. 23 einen Stößel in isometrischer Ansicht als Einzelteil;

Fig. 24 einen mit einer verbreiterten Stützfläche versehenen Stößel in isometrischer Ansicht als Einzelteil;

Fig. 25      in Stirnansicht einen triangulären, d.h. mit drei exzentrischen Höckern versehenen Antriebskern;

Fig. 25a      in Stirnansicht eine andere Ausführungsform des Antriebskerns der Fig. 25;

Fig. 26      eine Seitenansicht aus Fig. 25;

Fig. 26a      den Antriebskern der Fig. 25a in teilweise geschnittener Seitenansicht;

Fig. 27      in Stirnansicht einen Abtriebszahnring mit eingelegtem Führungskäfig;

Fig. 28      einen Schnitt XXVIII-XXVIII aus Fig. 27;

Fig. 29      die Stirnansicht eines anderen Abtriebszahnrings mit einem einstückig angeformten Führungskäfig;

Fig. 30      einen Schnitt XXX-XXX aus Fig. 29.

Anhand der vorstehend beschriebenen Zeichnungsfiguren werden nachfolgend verschiedene Ausführungsformen eines Untersetzungsgetriebes beschrieben, dessen Grundbestandteile jeweils ein kreisrunder Stützring 1 mit einer kreisförmigen inneren Stützfläche 2, eine Abrollbuchse 5 mit einer Außenmantelfläche 7 und ein elliptischer oder triangulärer Antriebskern 20 bzw. 20/1 bilden.

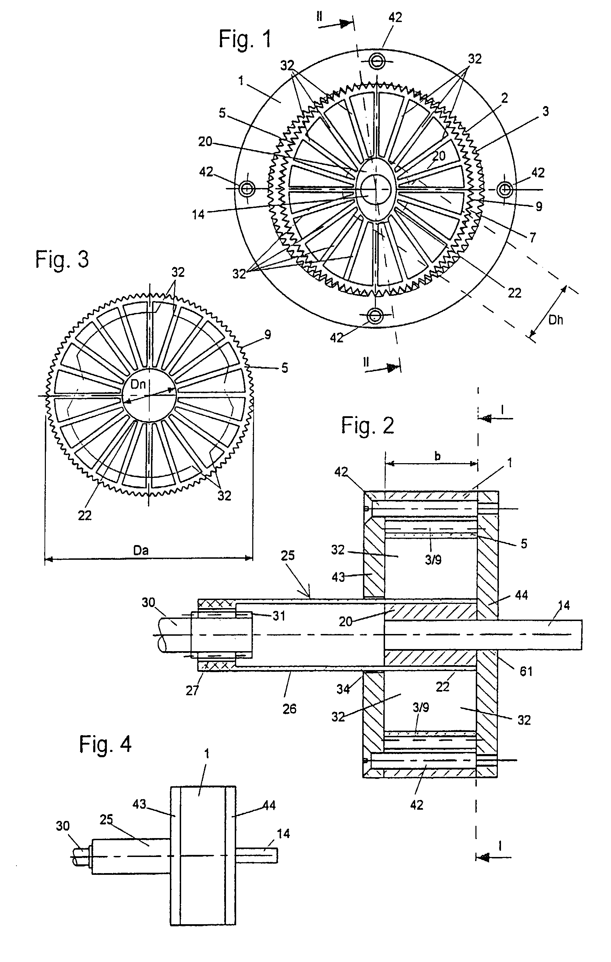

Beim Ausführungsbeispiel der Fig. 1, 2 und 3 ist der zylindrische Stützring 1 mit einer Innenverzahnung 3 versehen, die sich über seine gesamte Breite **b** erstreckt. Dieser Stützring 1 ist als feststehendes Getriebeteil undrehbar mit irgendeinem, in der Zeichnung nicht dargestellten, Getriebeträger oder dgl. verbunden. An seinen beiden planebenen Stirnflächen sind jeweils Stirnwände 43 und 44 angeordnet, die durch axiale Schrauben 42 miteinander bzw. mit dem Stützring 1 verbunden sind. In einer zentralen Bohrung 61 der Stirnwand 44 ist eine Antriebswelle 14 drehbar gelagert, die beispielsweise mit einem Antriebsmotor in Verbindung steht und von diesem in der einen oder anderen Drehrichtung angetrieben werden kann. Auf dieser Antriebswelle 14 ist der Antriebskern 20 drehsicher angeordnet, so daß sich auch der Antriebskern 20 winkeltreu mit der Antriebswelle 14 dreht, wenn diese angetrieben wird.

Die in ihrer Grundform kreisrunde Abrollbuchse 5 ist mit einer Außenverzahnung 9 versehen, die beim Ausführungsbeispiel der Fig. 1 bis 3 die gleiche Breite **b** aufweist wie der Stützring 1 bzw. dessen Innenverzahnung 3. Diese Außenverzahnung 9 der Abrollbuchse 5 steht, wie aus Fig. 1 ersichtlich ist, im Bereich zweier sich diametral gegenüberliegender Umfangsabschnitte jeweils mit mehreren Zähnen in Eingriff mit der Innenverzahnung 3 des Stützringes 1. Dies ist deshalb möglich, weil die Abrollbuchse 5 radial flexibel ist und über radiale, in diesem Falle als Speichen 32 ausgebildete Übertragungsglieder mit einer inneren Lagerbuchse 22 einstückig verbunden ist, in welcher der Antriebskern 20 drehbar angeordnet ist.

Der Innendurchmesser $D_n$ bzw. die daraus resultierende innere Umfangslänge der Lagerbuchse 22 ist dabei so gewählt, daß sie im montierten Zustand gemäß Fig. 1 und 2 den elliptischen Antriebskern 20 zumindest annähernd spielfrei umschließt.

Der Innendurchmesser $D_n$, der in ihrer Grundform zylindrischen Lagernabe 22 ist wenigstens um ein Viertel bis ein Drittel kleiner als der Außendurchmesser $D_a$ der in ihrer Grundform ebenfalls zylindrischen Abrollbuchse 5. Bei dem in den Fig. 1 bis 3 dargestellten Ausführungsbeispiel bilden die Abrollbuchse 5 und die Lagernabe 22 mit den als Speichen 32 ausgebildeten Übertragungselementen ein einstückiges Bauteil 35 aus Kunststoff, das sehr kostengünstig herstellbar und auch leicht montierbar ist. Infolge der relativ hohen Elastizität, mit der die Lagernabe 22 dabei ausgestattet sein kann, läßt sich auch der unrunde Antriebskern 20 sehr leicht in die Lagernabe 22 einsetzen.

Durch die Drehbewegung des exzentrischen, d.h. elliptischen Antriebskerns 20 in der Lagerbuchse 22 wird diese laufend elliptisch verformt. Diese elliptische Verformung wird durch die Speichen 32 auch auf die Abrollbuchse 5 übertragen, so daß laufend andere Zähne der Außenverzahnung 7 der Abrollbuchse 5 mit der Innenverzahnung 3 des stillstehenden Stützringes 1 in Eingriff kommen.

Weil die Zähnezahl $Z_1$ der Außenverzahnung 9 der Abrollbuchse 5 kleiner ist als die Zähnezahl $Z_2$ der Innenverzahnung 3 des Stützringes 1, ergibt sich dabei eine fortlaufende Drehung der Abrollbuchse 5 gegenüber dem stillstehenden Stützring 1 und zwar in entgegengesetzter Drehrichtung zur Antriebswelle 14 bzw. zum Antriebskern 20.

Wie bereits eingangs erwähnt, errechnet sich die daraus resultierende Übersetzung zwischen der Drehzahl der Antriebswelle 14 und der Drehzahl der Abrollbuchse 5 nach folgender Formel:

$$i = \frac{Z_2}{Z_1 - Z_2}$$

Wenn beispielsweise die Abrollbuchse 5 die Zähnezahl $Z_1 = 98$ und der Stützring 1 die Zähnezahl $Z_2 = 100$ aufweist, so ergibt sich aus der vorstehenden Formel eine Übersetzung i=1:50.

Statt der Zähnezahlen kann man auch die Umfangslängen der Innenfläche 2 als $Z_2$ und die Umfangslänge der Außenmantelfläche 7 der Abrollbuchse 5 als $Z_1$ einsetzen, um zum selben Ergebnis zu kommen.

Es soll damit gesagt sein, daß zwischen dem Stützring 1 und der Abrollbuchse 5 nicht unbedingt ein Zahneingriff bestehen muß, daß es vielmehr auch möglich ist, das Getriebe als reines Reibgetriebe auszubilden, wie nachstehend noch näher beschrieben wird.

Wie aus Fig. 2 ersichtlich ist, weist die Lagernabe 22 als Verbindungsglied 25 eine in ihrer Grundform ebenfalls zylindrische, dünnwändige und elastisch verformbare Hohlwelle 26 auf, die über eine Innenverzahnung 27 mit einem Zahnritzel 31 einer Arbeitswelle 30 gekoppelt ist. Diese Hohlwelle 26 durchragt dabei mit ausreichend radialem Spiel eine entsprechend weite zentrale Axialbohrung 34 der Stirnwand 43.

Durch dieses Verbindungsglied 25 werden die Drehbewegungen der Abrollbuchse 5 bzw. der Lagerbuchse 22 auf die Arbeitswelle 30 übertragen.

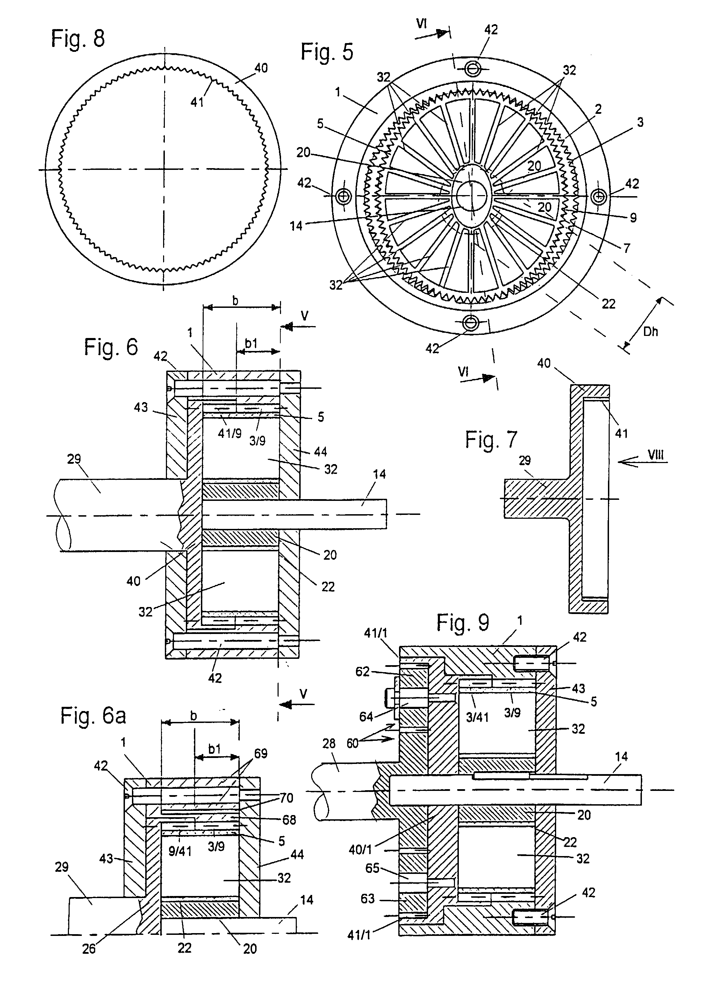

Das in den Fig. 5 und 6 dargestellte Ausführungsbeispiel unterscheidet sich von dem eben beschriebenen Ausführungsbeispiel der Fig. 1 bis 3 im wesentlichen dadurch, daß als Verbindungsglied zwischen der Abrollbuchse 5 und einer Arbeitswelle 29 ein Abtriebszahnring 40 mit einer Innenverzahnung 41 vorgesehen ist, der mit der Arbeitswelle 29 ein einstückiges Bauteil bildet. Dabei weist die Innenverzahnung 3 des Stützringes 1 eine geringere axiale Breite **b1** auf als die Außenverzahnung 9 der Abrollbuchse 5 mit der Breit **b**.

Die Innenverzahnung 41 des Abtriebszahnrings 40 hat eine Zähnezahl $Z_3$, die zumindest annähernd mit der Zähnezahl $Z_1$ der Außenverzahnung 9 der Abrollbuchse 5 übereinstimmt, die mit der Innenverzahnung 3 des Stützrings 1 in Eingriff steht.

Um jedoch sicherzustellen, daß bei einer Drehbewegung der Abrollbuchse 5 auch eine Drehbewegung des Abtriebszahnrades 40 erzeugt wird, muß sich die Zähnezahl $Z_3$ der Innenverzahnung 41 des Abtriebszahnrades 40 von der Zähnezahl $Z_2$ der Innenverzahnung 3 des Stützringes 1 unterscheiden.

Wenn die Zähnezahl $Z_3$ der Innenverzahnung 41 mit der Zähnezahl $Z_1$ der Außenverzahnung 9 der Abrollbuchse 5 übereinstimmt, besteht zwischen diesen beiden Verzahnungen 41 und 9 das Übersetzungsverhältnis 1:1.

Ist die Zähnezahl $Z_3$ der Innenverzahnung 41 größer als die Zähnezahl $Z_1$ der Abrollbuchse 5 so ergibt sich eine weitere Untersetzung ins Langsame; ist die Zähnezahl $Z_3$ kleiner als die Zähnezahl $Z_1$ so ergibt sich eine zusätzliche Übersetzung ins Schnelle. Wenn beispielsweise die Innenverzahnung 41 einen Zahn weniger aufweist als die Außenverzahnung 9, so wird sich der Abtriebszahnring 40 bei einer vollen Umdrehung der Abrollbuchse 5 um eine Zahnteilung weiter drehen als die Abrollbuchse 5. Wenn umgekehrt die Innenverzahnung 41 einen Zahn mehr aufweist als die Abrollbuchse 5, so wird bei einer vollen Umdrehung der Abrollbuchse 5 der Abtriebszahnring 40 eine Drehbewegung ausführen, die um eine Zahnteilung kleiner ist als eine volle Umdrehung.

In Fig. 9 ist eine Variante zu dem in den Fig. 5 und 6 dargestellten Untersetzungsgetriebe wiedergegeben, bei der ein Abtriebszahnring 40/1 mit seiner Innenverzahnung 41 in gleicher Weise in Zahneingriff steht mit der Außenverzahnung 9 der Abrollbuchse 5. Im Unterschied zu dem Abtriebszahnring 40 weist jedoch der Abtriebszahnring 40/1 keine Arbeitswelle auf. Vielmehr ist er über weitere Getriebeteile 60 getrieblich mit einer Arbeitswelle 28 verbunden. Diese Getriebeteile 60 bestehen aus zwei sich diametral gegenüberliegend auf exzentrisch angeordneten Lagerzapfen 64 und 65 drehbar gelagerten Planetenrädern 62 und 63, die einerseits mit einer Innenverzahnung 41/1 des Abtriebszahnrings 40/1 und andererseits mit einem Zahnrad 28', das einstückig mit der Arbeitswelle 28 verbunden ist, in Eingriff stehen. Mit Hilfe solcher zusätzlicher Getriebeteile 60 kann die Untersetzung zwischen der Antriebswelle 14 und der Arbeitswelle 28 zusätzlich verändert werden. Insbesondere lassen sich auf diese Weise noch höhere Untersetzungen bzw. Übersetzungen ins Langsame erzielen.

Wie schon bei den bekannten Untersetzungsgetrieben der gattungsgemäßen Art ist auch beim erfindungsgemäßen Untersetzungsgetriebe ein völlig spielfreier Zahneingriff zwischen den Zähnen der Abrollbuchse 5 und den Zähnen des Stützringes 1 ohne weiteres realisierbar, zumal sich dafür zusätzlich verbesserte Konditionen in sofern ergeben, als die Zähne der aus Kunststoff bestehenden Abrollbuchse 5 weicher und somit auch elastischer sind als die starren Zähne des gewöhnlich aus Stahl, Messing, Aluminium oder einem sonstigen harten Metall bestehenden Stützringes 1. Diese Werkstoffkombination trägt auch wesentlich zu einem völlig geräuschlosen Arbeiten des erfindungsgemäßen Getriebes bei, wobei für bestimmte Anwendungszwecke bzw. Anwendungsgebiete auch die Möglichkeit besteht, beide miteinander in Eingriff stehenden Teile aus Kunststoff oder Metall herzustellen.

Der Abtriebszahnring 40 bzw. 40/1 kann, je nach Verwendungszweck und Anwendungsgebiet, sowohl aus Kunststoff wie auch aus Metall hergestellt werden, wobei die Herstellung aus Kunststoff im Spritzgußverfahren bekanntlich wesentlich kostengünstiger ist.

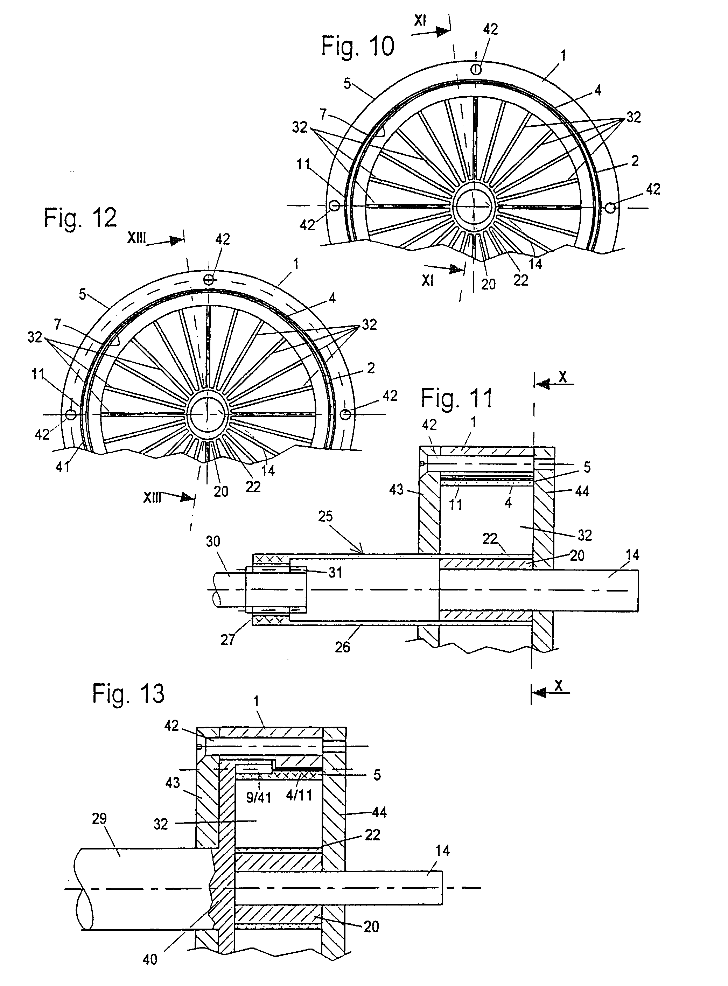

In den Fig. 10 und 11 ist eine Ausführungsform dargestellt, die sich von der Ausführungsform der Fig. 1 und 2 nur dadurch unterscheidet, daß die Innenfläche 3 des Stützrings 1 mit einem Reibbelag 4 und die Umfangsfläche 7 der mit Speichen 32 und einer Lagernabe 22 versehenen Abrollbuchse 5 mit einem Reibbelag 11 versehen ist und daß zwischen dem Stützring 1 und der Abrollbuchse 5 statt eines Zahneingriffs ein reibschlüssiger Eingriff besteht.

Bei der Ausführungsform der Fig. 12 und 13, die in ihrem Grundaufbau der Ausführungsform der Fig. 5 und 6 ähnlich ist, weisen die Innenfläche 2 des Stützrings 1 und die Umfangsfläche 7 der Abrollbuchse 5 jeweils Reibbeläge 4 bzw. 11 auf, die sich über die Breite **b1** erstrecken. Axial daneben steht die Abrollbuchse 5 durch eine Außenverzahnung 9 mit der Innenverzahnung 41 eines Abtriebzahnringes 40 in Eingriff.

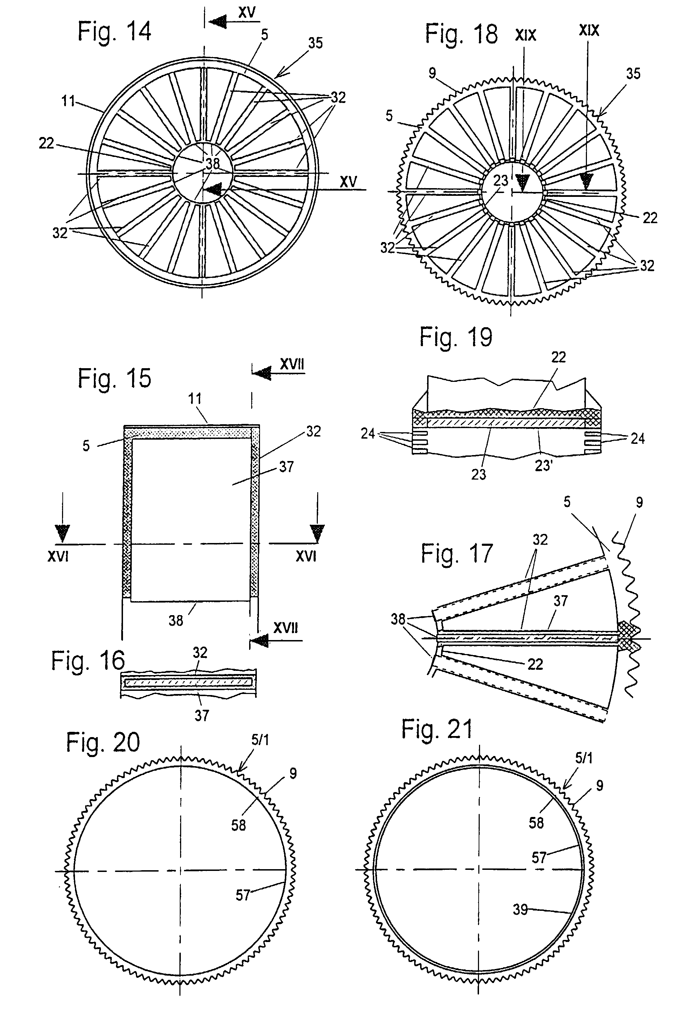

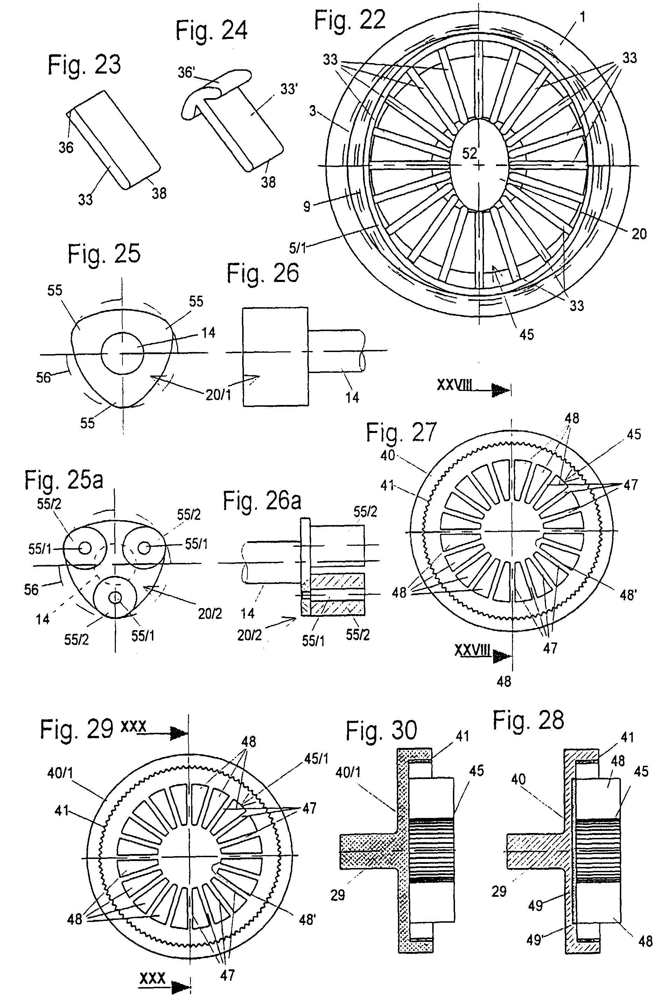

In den Fig. 14 bis 17 ist eine Ausführungsform der Abrollbuchse 5 dargestellt, bei der die einstückig mit ihr verbundenen Speichen 32 jeweils mit Metalleinlagen 37 versehen sind. Diese Metalleinlagen 37 weisen jeweils frei aus der Lagerbuchse nach innen vorstehende Fußenden 38 auf, mit denen sie unmittelbar auf der Mantelfläche 52 des Antriebskerns 20 aufliegen können (Fig. 22). Um dabei günstige Reibungsverhältnisse zu erzielen, ist es zweckmäßig die an sich bekannten Materialkombinationen z.B. Bronze und Stahl, Messing und Stahl od. dgl. zu wählen.

Wie aus den Fig. 15 bis 17 ersichtlich ist, sind die Metalleinlagen 37 jeweils mit Ausnahme ihrer Fußenden 38 allseitig mit Kunststoff ummantelt.

Solche Metalleinlagen 37 sind insbesondere dann zweckmäßig und vorteilhaft, wenn große radiale Kräfte, beispielsweise zur Erzielung eines schlupffreien reibschlüssigen Eingriffs zwischen der ggf. mit einem Reibbelag 11 versehenen Umfangsfläche 7 der Abrollbuchse 5 und der Innenfläche 3 des Stützringes 1, übertragen werden sollen. Dabei kann es auch zweckmäßig sein, den äußeren Ringkörper der Abrollbuchse 5 selbst mit einer ringförmigen Metalleinlage auszustatten, die eine bessere Kraftverteilung in Umfangsrichtung mit sich bringt. Selbstverständlich sind solche Metalleinlagen 37 auch bei Abrollbuchsen 5 zweckmäßig, die mit einer Außenverzahnung 7 versehen sind.

Zweckmäßig und vorteilhaft kann es auch sein, die Lager-nabe 22 einer Abrollbuchse 5 mit einer Lagerhülse 23 aus Metall zu versehen, um den Verschleiß durch Reibung innerhalb der Lagernabe 22 zu minimieren. Ein solches Ausführungsbeispiel ist in den Fig. 18 und 19 dargestellt. Dort ist eine aus Metall bestehende Lagerhülse 23 so in die Lagernabe 22 eingebettet, daß sie mit ihrer glatten reibungsarmen Innenfläche 23' den Antriebskern 20 zumindest annähernd spielfrei umschließt. Damit sich diese Lagerhülse 23 in der Lagernabe 22 nicht dreht und auch axial fixiert wird, ist sie an ihren Stirnseiten jeweils mit schlitzförmigen Einschnitten 24 versehen, welche von der Außenseite her mit dem Kunststoff der Lagernabe 22 ausgegossen sind.

Im fertigen Zustand bilden die Abrollbuchsen 5 der Fig. 14 und 18 jeweils ein einheitliches Bauteil 35, das sich einfach herstellen und auch einfach und funktionsgerecht in das Getriebe einbauen läßt.

Die Fig. 20 zeigt in Stirnansicht eine Abrollbuchse 5/1, die jedoch keine Speichen und auch keine Lagernabe aufweist. Sie besteht lediglich aus einem ringförmigen, radial flexiblen Körper 58 mit einer Außenverzahnung 9.

Bei der Ausführungsform der Fig. 21 ist diese Abrollbuchse 5/1 mit einer dünnwandigen, ringförmigen Metalleinlage 39 versehen. Bei der Verwendung dieser Abrollbuchsen 5/1 erfolgt die Kraftübertragung von dem in der Regel elliptischen Antriebskern 20 durch eine Vielzahl von radial beweglich geführten Stößeln 33 bzw.

33', die mit abgerundeten inneren Fußenden 38 unmittelbar auf der Mantelfläche 52 des Antriebskerns 20 aufliegen und deren äußere Enden mit einer gekrümmten ggf. nach beiden Seiten hin verbreiterten Stützfläche 36 bzw. 36' versehen sind. Mit diesen Stützflächen 36 bzw. 36' übertragen diese Stößel 33 bzw. 33' die radialen Verformungskräfte und -bewegungen auf den Ringkörper 58 der außenverzahnten Abrollbuchse 5/1, der mit seiner Verzahnung 9 auf diese Weise umlaufend in Eingriff gebracht wird mit den Zähnen der Innenverzahnung 3 des Stützringes 1.

Geführt sind diese Stößel 33 bzw. 33' jeweils in schlitzförmigen Radialführungen 47 eines hohlzylindrischen Führungskäfigs 45 bzw. 45/1, der konzentrisch zur Innenverzahnung 3 des Stützringes 1 innerhalb der Abrollbuchse 5/1 angeordnet und zentriert ist. Dieser Führungskäfig 45, 45/1 kann beispielsweise aus Kunststoff bestehen. Seine die schlitzförmigen Radialführungen 47 bildenden Sektoren 48 sind bei dem in den Fig. 27 und 28 dargestellten Ausführungsbeispiel mit einer gemeinsamen Stirnwand 49 versehen, die kreisförmig ausgebildet und in einer zylindrischen Ausnehmung 49' eines aus Metall bestehenden Abtriebszahnringes 40 zentriert ist.

Die Sektoren 48 bilden dabei einen kreisrunden Hohlraum 48', in dem sich der Antriebskern 20 frei drehen kann. Auch ihr Außendurchmesser ist so gewählt, daß die elliptische Radialverformung der Abrollbuchse 5/1 bzw. die Radialbewegung der mit verbreiterten Auflageflächen 36' versehenen Stößel 33' nicht behindert wird.

Bei der in den Fig. 29 und 30 dargestellten Ausführungsform ist der Führungskäfig 45/1 einstückig mit einem ebenfalls aus Kunststoff bestehenden Antriebszahnring 40 verbunden.

Es ist leicht vorstellbar, daß statt eines elliptischen Antriebskerns 20 auch ein triangulär ausgebildeter, d.h. mit drei radialen, auf einem gemeinsamen Umkreis 56 liegenden Höckern 55 versehener Antriebskern 20/1 verwendbar ist, durch den jeweils drei um 120° zueinander versetzte Umfangsabschnitte der Abrollbuchse mit der inneren Stützfläche 2 bzw. deren Verzahnung 3 in Eingriff gebracht werden (vgl. Fig. 25). Vorteilhaft angewendet könnte ein solcher triangulärer Antriebskern insbesondere dann werden, wenn sehr feine Verzahnungen mit geringer Zahnhöhe oder aber reibschlüssige Eingriffe zur Anwendung kommen. Bei Verzahnungen wäre dann darauf zu achten, daß die Zahndifferenzen zwischen der Verzahnung 3 des Stützrings 1 und der Verzahnung 9 der Abrollbuchse 5 bzw. 5/1 einen ganzzahligen Wert haben, der durch drei teilbar ist. Bei reibschlüssigem Eingriff kommt es darauf nicht an.

Eine weitere Gestaltungsmöglichkeit für den Antriebskern ist in den Fig. 25a und 26a dargestellt. Bei dieser Ausführungsform besteht der Antriebskern aus einer triangulären Scheibe 20/2, die auf der einen Seite mit der Antriebswelle 14 und auf der dieser gegenüber liegenden Seite mit drei um 120° zueinander versetzten Rollen 55/2 versehen ist. Diese Rollen 55/2 sind jeweils auf zylindrischen Lagezapfen 55/1 der Scheibe 20/2 drehbar gelagert und im übrigen so angeordnet und gestaltet, daß ihre zylindrischen Mantelflächen auf dem gemeinsamen zur Achse der Antriebswelle 14 koaxialen Umkreis 56 liegen, wie die Höcker 55 beim Ausführungsbeispiel der Fig. 25 und 26.

Daraus ergibt sich, daß der Antriebskern auch mehrteilig ausgebildet sein kann.

Um auch bei kritischen Zahnprofilen der Verzahnung 9 der Abrollbuchse 5 bzw. 5/1 einerseits und der Verzahnung 3 des Stützrings 1 andererseits mit Sicherheit eine absolut spielfreie Eingriffslage zu erhalten und dabei einen möglichst geringen Reibungsverschleiß zu gewährleisten, ist es von Vorteil und zweckmäßig, die Innenverzahnung 3 des Stützringes 1 radial elastisch zu gestalten. Dies kann beispielsweise durch die in Fig. 6a dargestellte Ausführungsform realisiert werden. Dabei ist zwischen einem relativ dünnwandigen Ringkörperteil 68, an dem die Innenverzahnung 3 angebracht ist, und dem äußeren dickwandigen Ringkörperteil 69 eine dünne Ringnut 70 angeordnet, die sich axial annähernd über die gesamte Breit b der Außenverzahnung 9 der Abrollbuchse 5 erstreckt.

Der mit der Verzahnung 3 versehene Teil des Stellrings 1 ist dadurch radial elastisch, so daß die beiden Verzahnungen 3 und 9 völlig spielfrei radial ineinander gepreßt werden können. Fertigungstoleranzen können auf diese Weise völlig kompensiert werden.

**Patentansprüche**

1. Untersetzungsgetriebe mit folgenden Merkmalen:

   - Ein starrer Stützring (1) mit einer im Wesentlichen zylindrischen Stützfläche (2),

   - eine radial flexible Abrollbuchse (5; 5/1), die eine Außenmantelfläche (7) mit einer kleineren Umfangslänge als die Stützfläche (2) aufweist,

   - eine Antriebswelle (14),

   - einem im Querschnitt unrunden Antriebskern (20; 20/1), der von der Antriebswelle (14) in Drehung versetzbar ist und hierbei einen Hüllkreis beschreibt,

   - durch die drehende Bewegung des unrunden Antriebskerns ist mindestens ein Umfangsabschnitt der Außenmantelfläche (7) der Abrollbuchse in fortlaufendem Wechsel mit der Stützfläche (2) des Stützrings (1) in im Wesentlichen schlupf freiem Eingriff gehalten,

   **gekennzeichnet** durch die weiteren Merkmale:

   - der Hüllkreis des unrunden Antriebskerns (20; 20/1) weist einen wesentlich kleineren Durchmesser ($D_h$) auf als die in ihrer Grundform zylindrische Abrollbuchse (5; 5/1),

   - die Abrollbuchse stützt sich durch eine Vielzahl von im Wesentlichen radial verlaufenden, unter sich gleichlangen Übertragungselementen (32, 33) auf dem Antriebskern ab.

2. Untersetzungsgetriebe nach Anspruch 1, dadurch gekennzeichnet, daß die Stützfläche des Stützringes (1) mit einer Innenverzahnung (2) und die radialflexible Abrollbuchse mit einer Außenverzahnung (9) versehen sind.

3. Untersetzungsgetriebe nach Anspruch 1 oder 2, dadurch gekennzeichnet, daß der Antriebskern eine exzentrische Form, insbesondere ellipsenförmige Form, aufweist.

4. Untersetzungsgetriebe nach einem der Ansprüche 1 bis 3, dadurch gekennzeichnet, daß die Abrollbuchse über ein Verbindungsglied (25) mit einer Arbeitswelle (30) in drehfester Verbindung steht oder in Verbindung bringbar ist.

5. Untersetzungsgetriebe nach einem der Ansprüche 1 bis 4, dadurch gekennzeichnet, daß die Übertragungselemente als Speichen (32) oder Stößel (33) ausgebildet sind.

6. Untersetzungsgetriebe nach einem der Ansprüche 1 bis 5, dadurch gekennzeichnet, daß die radial innen liegenden Enden der Übertragungselemente (32, 33) sich auf einer radialflexiblen Lagernabe (22) abstützen, in welcher der Antriebskern drehbar angeordnet ist.

7. Untersetzungsgetriebe nach einem der Ansprüche 1 bis 6, dadurch gekennzeichnet, daß der Innendurchmesser ($D_n$) der in ihrer Grundform zuylindrischen Lagernabe (22) wenigstens um ein Viertel bis ein Drittel kleiner ist als der Außendurchmesser ($D_a$) der in ihrer Grundform ebenfalls zylindrischen Abrollbuchse.

8. Untersetzungsgetriebe nach Anspruch 6 oder 7, dadurch gekennzeichent, daß die innere Umfangslänge der Lagernabe (22) der Umfangslänge des Antriebskerns derart angepaßt ist, daß die Lagernabe (22) den Antriebskern zumindest annähernd spielfrei umschließt.

9. Untersetzungsgetriebe nach einem der Ansprüche 6 bis 8, dadurch gekennzeichnet, daß die Abrollbuchse und die Lagernabe (22) mit den als Speichen (32) ausgebildeten Übertragungselementen ein einstückiges Bauteil (35) aus Kunststoff bilden.

**10.** Untersetzungsgetriebe nach Anspruch 9, dadurch gekennzeichnet, daß die aus Kunststoff bestehende Lagernabe (22) mit einer ebenfalls radialflexiblen, als Gleitlager für den Antriebskern dienenden Lagerhülse (23) aus Metall versehen ist, die den Antriebskern umschließt.

**11.** Untersetzungsgetriebe nach Anspruch 10, dadurch gekennzeichnet, daß die Speichen (32) allseits mit Kunststoff ummantelte Metalleinlagen (37) aufweisen, deren innere Fußenden (38) unmittelbar auf der Mantelfläche des Antriebskerns gleitend aufliegen.

**12.** Untersetzungsgetriebe nach einem der Ansprüche 9 bis 11, dadurch gekennzeichnet, daß die durch die Speichen (32) mit der Abrollbuchse verbundene Lagernabe (22) als Verbindungsglied (25) eine in ihrer Grundform zylindrische Hohlwelle (26) aufweist, an welche eine Arbeitswelle (30) angekuppelt ist.

**13.** Untersetzungsgetriebe nach einem der Ansprüche 2 bis 12, dadurch gekennzeichnet, daß die Außenverzahnung (9) der Abrollbuchse mit einer Innenverzahnung (3) des Stützrings (1) in Eingriff steht.

**14.** Untersetzungsgetriebe nach Anspruch 13, dadurch gekennzeichnet, daß die Innenverzahnung (3) des Stützringes (1) eine geringere axiale Breite (b1) aufweist als die Außenverzahnung (9) der Abrollbuchse und daß konzentrisch zum Stützring (1) ein relativ zu diesem drehbarer, zylindrischer Abriebszahnring (40; 40/1) angeordnet ist, mit dessen Innenverzahnung (41) jeweils zumindest annähernd die gleichen Zähne der Abrollbuchse in Eingriff stehen wie mit der Innenverzahnung (3) des Stützrings (1).

**15.** Untersetzungsgetriebe nach einem der Ansprüche 1 bis 14, dadurch gekennzeichnet, daß die Innenfläche (2) des Stützrings (1) und die Außenfläche (7) der Abrollbuchse (5/1) reibschlüssig miteinander in Eingriff stehen.

**16.** Untersetzungsgetriebe nach Anspruch 15, dadurch gekennzeichnet, daß die Abrollbuchse (5/1) axial neben ihrem mit einer inneren Reibfläche (11) des Stützringes (1) in reibschlüssigem Eingriff stehenden Mantelflächenabschnitt (11) eine Außenverzahnung (9) aufweist, die jeweils im Bereich ihrer mit dem Stützring (1) in reibschlüssigem Eingriff stehenden Umfangsabschnitte in Zahneingriff steht mit der Innenverzahnung (41) eines Abriebszahnrings (40; 40/1), der koaxial zum Stützring (1) drehbar gelagert ist.

**17.** Untersetzungsgetriebe nach Anspruch 15 oder 16, dadurch gekennzeichnet, daß der Abtriebszahnring (40) mit einer zum Stützring (1) koaxialen Arbeitswelle (29) versehen ist.

**18.** Untersetzungsgetriebe nach Anspruch 15 oder 16, dadurch gekennzeichnet, daß der Abtriebszahnring (40/1) über weitere Getriebeteile (60) mit einer Arbeitswelle (28) in getrieblicher Verbindung steht.

**19.** Untersetzungsgetriebe nach Anspruch 12, dadurch gekennzeichnet, daß die mit der Außenverzahnung (9) der Abrollbuchse (5) in Eingriff stehende Innenverzahnung (41) des Abtriebszahnrings (40; 40/1) die gleiche Zähnezahl ($Z_1$) aufweist wie die Abrollbuchse (5), jedoch zumindest annähernd den gleichen Teilkreisdurchmesser und/oder Innendurchmesser wie die Innenverzahnung (3) des Stützrings (1) hat.

**20.** Untersetzungsgetriebe nach Anspruch 12, dadurch gekennzeichnet, daß die mit der Außenverzahnung (9) der Abrollbuchse in Eingriff stehende Innenverzahnung (41) des Abtriebszahnrings (40) eine andere Zähnezahl ($Z_3$) aufweist wie die Abrollbuchse.

**21.** Untersetzungsgetriebe nach einem der Ansprüche 1 bis 8 oder 11 bis 20 dadurch gekennzeichnet, daß die zwischen der Abrollbuchse (5; 5/1) einerseits und dem Antriebskern (20; 20/1) bzw. der Lagernabe (22) andererseits angeordneten, als Stößel (33) ausgebildeten Übertragungselemente radial beweglich in einem die Lagernabe (22) bzw. den Antriebskern (20; 20/1) umschließenden zylindrischen Führungskäfig (45; 45/1) gelagert sind, deren äußere Enden (36) lose an einer Innenfläche (57) einer aus einem Ringkörper (58) bestehenden Abrollbuchse (5/1) und deren innere Fußenden (38) lose an der Mantelfläche (52) des Antriebskerns (20, 20/1) stützend anliegen.

**22.** Untersetzungsgetriebe nach Anspruch 21, dadurch gekennzeichnet, daß die Stößel (33) aus plattenförmigen Metallteilen bestehen, die jeweils in Radialführungen (47) des aus Kunststoff bestehenden Führungskäfigs (45; 45/1) geführt sind.

**23.** Untersetzungsgetriebe nach einem der Ansprüche 5 bis 22, dadurch gekennzeichnet, daß die Stößel (33) an ihren radial außen liegenden Enden (36) mit verbreiterten Stützflächen (36) versehen sind.

**24.** Untersetzungsgetriebe nach Anspruch 22 oder 23, dadurch gekennzeichnet, daß der Führungskäfig (45) mittels einer Stirnwand (49) an einer zum Stützring (1) konzentrischen Ringfläche (49') zentriert geführt ist.

**25.** Untersetzungsgetriebe nach Anspruch 22 oder 23, dadurch gekennzeichnet, daß der Führungskäfig (45/1) einstückig an einem ebenfalls aus Kunststoff bestehenden Abtriebszahnring (40/1) angeformt ist.

**26.** Untersetzungsgetriebe nach einem der Ansprüche 1 bis 14 oder 16 bis 25, dadurch gekennzeichnet, daß die Innenverzahnung (3) des Stützringes (1) radial elastisch ausgebildet ist.

**27.** Untersetzungsgetriebe nach Anspruch 26, dadurch gekennzeichnet, daß die Innenverzahnung (3) des Stützringes (1) an einem dünnwandigen Ringkörperteil (68) angebracht ist, den eine umlaufende, an einer Stirnseite offene Ringnut (70) von einem äußeren dickwandigen Ringkörperteil (69) trennt.

**28.** Untersetzungsgetriebe nach einem der Ansprüche 1 bis 27, dadurch gekennzeichnet, daß der Antriebskern (20/1) drei zueinander um jeweils 120° versetzte, auf einem zum Stützring (1) konzentrischen Umkreis (56) liegende Höcker (55) aufweist.

**29.** Untersetzungsgetriebe nach einem der Ansprüche 1 bis 28, dadurch gekennzeichnet, daß der Stützring (1) Bestandteil eines zylindrischen Gehäuses ist, das die Abrollbuchse (5; 5/1) und den ggf. vorhandenen Abtriebszahnring (40; 40/1) umschließt und das wenigstens auf einer Stirnseite mit einer Stirnwand (43, 44) versehen ist.

**30.** Untersetzungsgetriebe nach einem der Ansprüche 1 bis 29, dadurch gekennzeichnet, daß der Antriebskern drei auf achsparallelen, um 120° zueinander versetzten Lagerzapfen (55/1) einer Scheibe (20/2) drehbar gelagerte Rollen (55/2) aufweist, deren zylindrische Umfangsflächen auf einem gemeinsamen zur Achse der Antriebswelle (14) koaxialen Umkreis (56) liegen.

**Claims**

**1.** A reducing gear system with the following features:

- a rigid support ring (1) having a substantially cylindrical support face (2),

- a radially flexible rolling cup (5; 5/1), which comprises a outer shell (7) with a smaller circumferential length than the support face (2),

- a driving shaft (14),

- an actuating core (20; 20/1) that has a non-circular cross section, which can be set in rotation by the driving shaft (14) and in so doing describes an enveloping circle,

- by the rotating motion of the non-circular actuating core at least one circumferential section of the outer shell (7) of the rolling cup is kept, whilst continuously changing, in essentially non-slip engagement with the support face (2) of the support ring (1),

**characterised by** the further features:

- the enveloping circle of the non-circular actuating core (20; 20/1) comprises a substantially smaller diameter ($D_h$) than the rolling cup (5; 5/1) having a cylindrical basic shape;

- the rolling cup is supported on the actuating core by a plurality of transmission elements (32, 33) that extend substantially radially and are of the same length.

**2.** A reducing gear system according to Claim 1, **characterised in that** the support face of the support ring (1) is provided with internal toothing (2) and the radially flexible rolling cup is provided with external toothing (9).

**3.** A reducing gear system according to Claim 1 or 2, **characterised in that** the actuating core comprises an eccentric shape, in particular an elliptical shape.

**4.** A reducing gear system according to one of Claims 1 to 3, **characterised in that** the rolling cup is in rotationally fixed communication or can be brought into communication with a operating shaft (30) via a connecting member (25).

**5.** A reducing gear system according to one of Claims 1 to 4, **characterised in that** the transmission elements are constructed as spokes (32) or tappets (33).

**6.** A reducing gear system according to one of Claims 1 to 5, **characterised in that** the radially inner ends of the transmission elements (32, 33) are supported on a radially flexible bearing hub (22), in which the actuating core is rotatably mounted.

**7.** A reducing gear system according to one of Claims 1 to 6, **characterised in that** the internal diameter ($D_n$) of the bearing hub (22) having a cylindrical basic shape is smaller by at least one quarter to one third than the external diameter ($D_a$) of the rolling cup also having a cylindrical basic shape.

8. A reducing gear system according to Claim 6 or 7, **characterised in that** the inner circumferential length of the bearing hub (22) is adapted to the inner circumferential length of the actuating core in such a manner that the bearing hub (22) surrounds the actuating core at least approximately without any clearance.

9. A reducing gear system according to one of Claims 6 to 8, **characterised in that** the rolling cup and the bearing hub (22) with the transmission elements constructed as spokes (32) form a single-part component (35) made of plastic material.

10. A reducing gear system according to Claim 9, **characterised in that** the bearing hub (22) made from plastic material is provided with a metal bearing sleeve (23) which is also radially flexible and serves as a sliding bearing for the actuating core, and which surrounds the actuating core.

11. A reducing gear system according to Claim 10, **characterised in that** the spokes (32) comprise metal inserts (37) sheathed on all sides with plastic material, the inner foot ends (38) of which slidingly lie directly on the shell of the actuating core.

12. A reducing gear system according to one of Claims 9 to 11, **characterised in that** the bearing hub (22) connected to the rolling cup by the spokes (32) comprises as a connecting member (25) a hollow shaft (26) with a cylindrical basic shape to which an operating shaft (30) is coupled.

13. A reducing gear system according to one of Claims 2 to 12, **characterised in that** the external toothing (9) of the rolling cup engages with internal toothing (3) of the support ring (1).

14. A reducing gear system according to Claim 13, **charactered in that** the internal toothing (3) of the support ring (1) has a smaller axial width (b1) than the external toothing (9) of the rolling cup **and in that** disposed concentrically to the support ring (1) is a cylindrical driven annular gear (40; 40/1) that is rotatable in relation to said support ring, with the internal toothing (41) of which in each case at least approximately the same teeth of the rolling cup engage as with the internal toothing (3) of the support ring (1).

15. A reducing gear system according to one of Claims 1 to 14, **characterised in that** the inner face (2) of the support ring (1) and the outer face (7) of the rolling cup engage frictionally with one another.

16. A reducing gear system according to Claim 15, **characterised in that** axially next to its shell portion (11) that frictionally engages with an inner friction face (11) of the support ring (1), the rolling cup (5/1) comprises external toothing (9), which in the region of its circumferential portions that are in frictional engagement with the support ring (1) is in toothed engagement with the internal toothing (41) of a driven annular gear (40; 40/1) which is rotatably mounted coaxially to the support ring (1).

17. A reducing gear system according to Claim 15 or 16, **characterised in that** the driven annular gear is provided with an operating shaft (29) that is coaxial to the support ring (1).

18. A reducing gear system according to Claim 15 or 16, **characterised in that** the driven annular gear (40/1) communicates via further gear parts (60) with an operating shaft (28).

19. A reducing gear system according to Claim 12, **characterised in that** the internal toothing (41) of the driven annular gear (40; 40/1) that is in engagement with the external toothing (9) of the rolling cup (5) has the same number of teeth ($Z_1$) as the rolling cup (5), but has at least approximately the same reference diameter and/or internal diameter as the internal toothing (3) of the support ring (1) .

20. A reducing gear system according to Claim 12, **characterised in that** the internal toothing (41) of the driven annular gear (40) that is in engagement with the external toothing (9) of the rolling cup has a different number of teeth ($Z_3$) than the rolling cup.

21. A reducing gear system according to one of Claims 1 to 8 or 11 to 20, **characterised in that** the transmission elements, that are disposed between the rolling cup (5; 5/1) on the one hand and the actuating core (20; 20/1) and the bearing hub (22) on the other hand and are constructed as tappets (33), are mounted with radial mobility in a cylindrical guide cage (45; 45/1) surrounding the bearing hub (22) and the actuating core (20; 20/1), the outer ends (36) of which are supported on an inner face (57) of a rolling cup (5/1) consisting of an annular member (58) and its inner feet ends (38) are loosely supported on the shell (52) of the actuating core (20, 20/1).

22. A reducing gear system according to Claim 21, **characterised in that** the tappets (33) consist of plate-shaped metal parts, which are each guided in radial guides (47) of the guide cage (45; 45/1) that is made of plastic material.

23. A reducing gear system according to one of Claims 5 to 22,
**characterised in that** the tappets (33) are provided with widened support faces (36) at their radially outer ends (36).

24. A reducing gear system according to Claim 22 or 23,
**characterised in that** the guide cage (45) is guided in centred manner by means of an end wall (49) on a ring face (49') concentric to the support ring (1).

25. A reducing gear system according to Claim 22 or 23,
**characterised in that** the guide cage (45/1) is integrally formed in one piece on a driven annular gear (40/1) that is also made from plastic material.

26. A reducing gear system according to one of Claims 1 to 14,
**characterised in that** the internal toothing (3) of the support ring (1) has a radially elastic construction.

27. A reducing gear system according to Claim 26,
**characterised in that** the internal toothing (3) of the support ring (1) is mounted on a thin-walled annular part (68), which a circumferential annular groove (70) open on one end side separates from an external thick-walled annular part (69).

28. A reducing gear system according to one of Claims 1 to 27,
**characterised in that** the actuating core (20/1) comprises three humps (55) which are offset in relation to one another by respectively 120° and lie on a circumscribed circle (56) concentric to the support ring (1).

29. A reducing gear system according to one of Claims 1 to 28,
**characterised in that** the support ring (1) is a component of a cylindrical housing, which surrounds the rolling bush (5; 5/1) and the possibly provided driven annular gear (40; 40/1) and which is provided with an end wall (43, 44) at least on one end side.

30. A reducing gear system according to one of Claims 1 to 29,
**characterised in that** the actuating core comprises three rollers (55/2) that are rotatably mounted on axially parallel journal . pins (55/1) of a disk (20/2) that are offset in relation to one another by 120°, the cylindrical circumferential faces of said rollers lying on a common circumscribed circle (56) coaxial to the axis of the driving shaft (14).

**Revendications**

1. Mécanisme réducteur dans lequel :

   - une bague d'appui (1), rigide, présente une surface d'appui (2),
   - une bague de roulement (5 ; 5/1), flexible radialement, présente une portée extérieure (7) dont le périmètre est inférieur à celui de la surface d'appui (2),
   - l'entraînement est assuré par un arbre (14),
   - un noyau d'entraînement (20 ; 20/1), à section non circulaire, peut être mis en rotation par l'arbre d'entraînement (14) pour se déplacer à l'intérieur d'un cercle enveloppe,
   - le mouvement de rotation du noyau maintient au moins une partie de la périphérie de la portée extérieure (7) de la douille de déplacement en prise pratiquement sans glissement avec la surface d'appui (2) de la bague d'appui (1), avec changement permanent,

   caractérisé en ce que

   - le cercle enveloppe à l'intérieur duquel se déplace le noyau d'entraînement non circulaire (20 ; 20/1) a un diamètre (Dh) nettement inférieur à celui de la douille de roulement (5 ; 5/1) dont la forme de base est cylindrique,
   - la douille de roulement s'appuie sur le noyau d'entraînement par un certain nombre d'éléments de transmission (32, 33) essentiellement radiaux et d'égales longueurs.

2. Mécanisme réducteur selon la revendication 1, caractérisé en ce que
la portée d'appui de la bague d'appui (1) présente une denture intérieure (2) tandis que la douille flexible de roulement porte une denture extérieure (9).

3. Mécanisme réducteur selon la revendication 1 ou 2, caractérisé en ce que
le noyau d'entraînement a une forme excentrique, en particulier une forme elliptique.

4. Mécanisme réducteur selon une des revendications 1 à 3,
caractérisé en ce que
la douille de roulement est solidaire en rotation, par l'intermédiaire d'un organe de liaison (25) avec un arbre de travail (30), ou peut être reliée à cet arbre.

5. Mécanisme réducteur selon une des revendications 1 à 4,
caractérisé en ce que
les éléments de transmission sont des rayons (32) ou des poussoirs (33) .

**6.** Mécanisme réducteur selon une des revendications 1 à 5, caractérisé en ce que les extrémités, situées radialement vers l'intérieur, des éléments de transmission (32, 33) s'appuient sur un moyeu de palier (22) flexible radialement et dans lequel le noyau d'entraînement est monté tournant.

**7.** Mécanisme réducteur selon une des revendications 1 à 6, caractérisé en ce que le diamètre intérieur (Dn) du moyeu de palier (22) à forme de base cylindrique, est au moins trois à quatre fois plus petit que le diamètre extérieur (Da) de la douille de roulement à forme de base également cylindrique.

**8.** Mécanisme réducteur selon la revendication 6 ou 7, caractérisé en ce que le périmètre intérieur du moyeu de palier (22) est adapté à celui du noyau d'entraînement de manière que le moyeu (22) entoure pratiquement sans jeu le noyau d'entraînement.

**9.** Mécanisme réducteur selon une des revendications 6 à 8, caractérisé en ce que la douille de roulement et le moyeu de palier (22) constituent avec les éléments de transmission ayant la forme de rayons (32) un composant (35) monobloc, en plastique.

**10.** Mécanisme réducteur selon la revendication 9, caractérisé en ce que le moyeu de palier (22), en plastique, est équipé d'un coussinet de palier (23) en métal, également flexible radialement et servant de palier de glissement pour le noyau d'entraînement qu'il entoure.

**11.** Mécanisme réducteur selon la revendication 10, caractérisé en ce que les rayons (32) portent des inserts métalliques (37) entourés de tous côtés par la matière plastique et dont les pieds (38) situés vers l'intérieur sont en contact glissant directement sur la surface externe du noyau d'entraînement.

**12.** Mécanisme réducteur selon une des revendications 9 à 11, caractérisé en ce que le moyeu de palier (22) relié à la douille de roulement par les rayons (32) comprend, comme organe de liaison (25) un arbre creux (26) à forme de base cylindrique, auquel est accouplé un arbre de travail (30).

**13.** Mécanisme réducteur selon une des revendications 2 à 12, caractérisé en ce que la denture extérieure (9) de la douille de roulement est en prise avec une denture intérieure (3) portée par la bague d'appui (1).

**14.** Mécanisme réducteur selon la revendication 13, caractérisé en ce que

- la denture intérieure (3) de la bague d'appui (1) a une largeur axiale (b1) inférieure à celle de la denture extérieure (9) de la douille de roulement,
- concentriquement à la bague d'appui (1) et pouvant tourner par rapport à celle-ci, se trouve une bague dentée de sortie (40 ; 40/1) dont la denture intérieure (41) est en prise avec au moins approximativement autant de dents de la douille de roulement qu'avec la denture intérieure (3) de la bague d'appui (1).

**15.** Mécanisme réducteur selon une des revendications 1 à 14, caractérisé en ce que la portée intérieure (2) de la bague d'appui (1) et la portée extérieure (7) de la douille de roulement sont en prise verrouillée par friction.

**16.** Mécanisme réducteur selon la revendication 15, caractérisé en ce que la douille de roulement (5/1) présente, à proximité axiale de la partie de son enveloppe (11) qui se trouve en prise verrouillée par friction avec une portée intérieure de friction (11) de la bague d'appui (1), une denture extérieure (9) qui, dans la zone de ses parties périphériques qui sont en prise verrouillée par friction avec la bague d'appui (1), est en prise avec la denture intérieure (41) d'une bague dentée de sortie (40 ;40/1) montée tournante coaxialement à la bague d'appui (1).

**17.** Mécanisme réducteur selon la revendication 15 ou 16, caractérisé en ce que la bague dentée de sortie (40) porte un arbre de travail (29) coaxial à la bague d'appui (1).

**18.** Mécanisme réducteur selon la revendication 15 ou 16, caractérisé en ce que la bague dentée de sortie (40/1) est en liaison mécanique avec l'arbre de travail (28), par d'autres parties (60) du mécanisme.

**19.** Mécanisme réducteur selon la revendication 12, caractérisé en ce que la denture intérieure (41) de la bague dentée de sortie (40 ; 40/1) qui se trouve en prise avec la denture extérieure (9) de la douille de roulement (5) présente le même nombre de dents (Zi) que la douille de roulement (5) mais a au moins approximativement le même diamètre de cercle primitif et/ou le même diamètre intérieur que la denture intérieure (3) de la bague d'appui (1).

20. Mécanisme réducteur selon la revendication 12, caractérisé en ce que
la denture intérieure (41) de la bague dentée de sortie (40) qui est en prise avec la denture extérieure (9) de la douille de roulement, a un nombre de dents (Z3) différent de celui de la douille de roulement.

21. Mécanisme réducteur selon une des revendications 1 à 8,
caractérisé en ce que
les éléments de transmission entre la douille de roulement (5 ; 5/1) d'une part et le noyau d'entraînement (20 ; 20/1) ou le moyeu de palier (22) d'autre part sont constitués par des poussoirs (33) montés avec mobilité radiale dans une cage cylindrique de guidage (45 ; 45/1) enveloppant le moyeu de palier (22) et le noyau d'entraînement, les extrémités (36), situées vers l'extérieur, des poussoirs (32) étant en appui libre sur une portée intérieure (57) d'une douille de roulement (5/1) constituée d'un corps annulaire (58), tandis que les pieds (38) situés vers l'intérieur, des poussoirs sont en appui libre sur la surface externe (52) du noyau d'entraînement (20, 20/1).

22. Mécanisme réducteur selon la revendication 21, caractérisé en ce que
les poussoirs (33) sont composés de parties métalliques en forme de plaques qui peuvent se déplacer chacune dans un guidage radial correspondant (47) de la cage de guidage (45 ; 45/1) en matière plastique.

23. Mécanisme réducteur selon une des revendications 5 à 22,
caractérisé en ce que
les poussoirs (33) portent, à leurs extrémités (36) situées radialement vers l'extérieur, des portées d'appui (36) élargies.

24. Mécanisme réducteur selon la revendication 22 ou 23,
caractérisé en ce que
la cage de guidage (45) est, par une paroi latérale (49), guidée et centrée sur une portée annulaire (49') concentrique à la bague d'appui (1).

25. Mécanisme réducteur selon la revendication 22 ou 23,
caractérisé en ce que
la cage de guidage (45/1) est moulée en une seule pièce avec une bague dentée de sortie (40/1) également en plastique.

26. Mécanisme réducteur selon une des revendications 1 à 14 ou 16 à 25,
caractérisé en ce que
la denture intérieure (3) de la bague d'appui (1) est élastique radialement.

27. Mécanisme réducteur selon la revendication 26, caractérisé en ce que
la denture intérieure (3) de la bague d'appui (1) est portée par une partie de corps annulaire (68) à paroi mince, qui est séparée d'une partie extérieure de corps annulaire (69) à paroi épaisse par une rainure annulaire (70) creusée dans une face frontale.

28. Mécanisme réducteur selon une des revendications 1 à 27,
caractérisé en ce que
le noyau d'entraînement (20/1) présente trois bossages décalés entre eux de 120° et qui sont tangents à un cercle enveloppe (56) concentrique à la bague d'appui (1).

29. Mécanisme réducteur selon une des revendications 1 à 28,
caractérisé en ce que
la bague d'appui (1) est un composant d'un boîtier cylindrique qui entoure la douille de roulement (5 ; 5/1) et la bague dentée de sortie (40 ; 40/1) éventuellement présente, le boîtier comportant, au moins d'un côté, une paroi frontale (43, 44).

30. Mécanisme réducteur selon une des revendications 1 à 29,
caractérisé en ce que
le noyau d'entraînement porte trois galets montés tournant sur des tourillons (55/1) à axes parallèles décalés entre eux de 120° et portés par un disque (20/2), ces galets étant tangents par leurs périphéries externes cylindriques à un même cercle enveloppe (56) coaxial à l'arbre d'entraînement (14).

Fig. 1

Fig. 3

Fig. 2

Fig. 4

Fig. 8

Fig. 5

Fig. 6

Fig. 7

Fig. 6a

Fig. 9

Fig. 10

Fig. 12

Fig. 11

Fig. 13

Fig. 14

Fig. 15

Fig. 16

Fig. 18

Fig. 19

Fig. 17

Fig. 20

Fig. 21

Fig. 24

Fig. 23

Fig. 22

Fig. 25

Fig. 26

Fig. 25a

Fig. 26a

Fig. 27

Fig. 29

Fig. 30

Fig. 28